# FASCICULE DE BREVET EUROPEEN

(11) **EP 2 989 449 B1**
(45) Date de publication et mention de la délivrance du brevet: **08.04.2020**
(21) Numéro de dépôt: 14722298.8
(22) Date de dépôt: 18.04.2014
(51) Int. Cl.: G01N 21/89

(54) **MACHINE A TISSER OU ENROULER UNE TEXTURE FIBREUSE PERMETTANT UN CONTRÔLE D'ANOMALIES PAR ANALYSE D'IMAGES**
MASCHINE ZUM WEBEN ODER WICKELN EINER FASERIGEN TEXTUR ZWECKS DURCHFÜHRUNG VON ANAMOLIE-PRÜFUNGEN MITTELS BILDANALYSE
MACHINE FOR WEAVING OR WINDING A FIBROUS TEXTURE THAT ALLOWS CHECKS FOR ANAMOLY TO BE MADE USING IMAGE ANALYSIS

(30) Priorité: 26.04.2013 FR 1353888
(43) Date de publication de la demande: 02.03.2016
(73) Titulaire: Safran Aircraft Engines, 75015 Paris (FR)
(72) Inventeur: MATHON, Richard, F-77550 Moissy-Cramayel Cedex (FR); CORRADINI, Sylvain, F-77550 Moissy-Cramayel Cedex (FR); DURAND, Jean-François, F-12160 Baraqueville (FR)
(74) Mandataire: Cabinet Beau de Loménie
(86) Numéro de dépôt international: PCT/FR2014/050956
(87) Numéro de publication internationale: WO 2014/174193

(56) Documents cités:
- WO-A1-2012/140355
- US-A1- 2005 078 306
- US-A1- 2007 271 064
- US-B1- 6 725 123

## Description

### Arrière-plan de l'invention

La présente invention se rapporte au domaine général de la réalisation de carters de turbine à gaz en matériau composite, et plus particulièrement de carters de rétention pour soufflante de turbine à gaz pour moteurs aéronautiques.

De façon courante, un carter de rétention de soufflante est formé par une paroi relativement mince définissant la veine d'entrée d'air dans le moteur et supportant un matériau abradable au droit de la trajectoire des sommets des aubes de soufflante et un revêtement de traitement acoustique éventuel, et par une structure de bouclier fixé sur cette paroi du côté extérieur, au niveau de la soufflante pour retenir les débris, tels que des objets ingérés ou des fragments d'aubes endommagées, projetés par la centrifugation, afin d'éviter qu'ils traversent le carter et atteignent d'autres parties de l'aéronef.

La réalisation d'un carter de rétention de soufflante en matériau composite a déjà été proposée. On pourra par exemple se référer au document EP 1,961,923 qui décrit la fabrication d'un carter en matériau composite à épaisseur évolutive comprenant la formation d'un renfort fibreux par des couches superposées d'une texture fibreuse et la densification du renfort fibreux par une matrice. Plus précisément, ce document prévoit d'utiliser un mandrin d'appel pour le tissage tridimensionnel de la texture fibreuse, celle-ci étant ensuite enroulée en couches superposées sur un mandrin d'imprégnation dont le profil correspond à celui du carter à fabriquer. La préforme ainsi obtenue est maintenue sur le mandrin d'imprégnation et une imprégnation par résine est réalisée avant polymérisation.

Il doit toutefois être noté que lors de l'opération d'enroulement, une partie de la préforme (plus précisément sa face inférieure) n'est pas visible par les opérateurs qui sont situés sur une plateforme de travail classiquement disposée au-dessus de la machine d'enroulement. Cette configuration ne permet donc pas la détection des différentes anomalies pouvant affecter la préforme comme des pollutions (scotch, fibres coupées, ...) ou des défauts de tissage sur cette partie de la préforme qui ne peut faire l'objet d'un contrôle visuel des opérateurs. Or, cette opération d'enroulement est l'ultime étape dans le process de fabrication où ces anomalies peuvent encore être détectées. Aussi, si elles ne sont pas identifiées lors de l'enroulement, elles sont occultées car recouvertes par la superposition des couches de la préforme.

Il est important de noter que ces anomalies, situées sur la face cachée de la préforme lors de l'opération d'enroulement, ne sont pas non plus détectables lors de l'opération préalable de tissage, car elles sont également occultées lors du tissage sur un métier à tisser par exemple.

Par conséquent, un besoin existe de disposer d'une machine d'enroulement ou d'une machine (ou métier) à tisser permettant de détecter à la fois les pollutions et les défauts de tissage sur la face cachée de la préforme avant tout enroulement. En effet, après enroulement, il est impossible de contrôler ces contaminations et défauts de la préforme et il est alors impossible de valider l'opération d'enroulement. Un procédé de détermination d'anomalies par analyse d'image dans une bande de matériau est divulguée dans le document US 6,725,123 B1.

### Objet et résumé de l'invention

La présente invention a donc pour but principal de pallier un tel besoin en permettant une solution de réparation ou un rebut de la préforme avant la phase d'imprégnation. Un autre but de l'invention est de permettre des analyses statistiques des données sur la position, l'occurrence et le type d'anomalie pour le suivi qualité des opérations de tissage et/ou d'enroulement.

Ces buts sont atteints avec un procédé de détermination d'anomalies de tissage dans une machine à tisser ou enrouler une préforme fibreuse sur un mandrin ayant un axe de rotation sensiblement horizontal et destiné à la recevoir, le mandrin étant entrainé autour de cet axe de rotation par un moteur actionné par une unité de commande ; procédé dans lequel plusieurs caméras dirigées sous la texture fibreuse scrutent la face cachée de la préforme fibreuse et acquièrent des images de cette face cachée et un module d'analyse d'images traite ces images de la face cachée de la préforme fibreuse dans plusieurs fenêtres adjacentes de scrutation pour en extraire des motifs de tissage et les comparer avec des motifs de tissage de référence préalablement enregistrés dans le module et l'unité de commande arrête la rotation du mandrin si le résultat de la comparaison fait apparaître, dans au moins une fenêtre de scrutation, une différence d'aspect entre ces deux motifs de tissage caractéristique de la présence d'une anomalie résultant de pollutions et/ou défauts de tissage de la préforme fibreuse et lorsqu'une anomalie est reconnue, sa position sur la préforme fibreuse et une désignation choisie par un opérateur parmi des types d'anomalies prédéterminés sont enregistrés avec une image de ladite anomalie et lorsque cette anomalie reconnue est réparée, une désignation correspondante choisie par un opérateur parmi des types de réparation prédéterminés est enregistrée avec une image de ladite réparation et les anomalies reconnues et les anomalies réparées sont visualisées sur une représentation développée ou en trois dimensions de ladite préforme fibreuse, accessible à l'opérateur au niveau de ladite unité de commande.

Par l'analyse en temps réel des images de la préforme fibreuse au niveau de plusieurs fenêtres de scrutation, il est possible de contrôler toute pollution ou défaut dans le motif de tissage et de corriger voire d'invalider si besoin l'opération de tissage ou d'enroulement une fois réalisée. Il en résulte une machine parfaitement adaptée à la réalisation de carters de rétention de soufflante en matériau composite pour moteur aéronautique. En particulier, le fonctionnement de cette machine peut être entièrement automatisé, ce qui contribue à diminuer le temps de cycle de fabrication de ces carters.

De préférence, la taille, la position et le nombre des fenêtres de scrutation sont définies par l'opérateur directement à partir des images issues des caméras.

Avantageusement, le nombre de fenêtres de scrutation correspond au plus au nombre de caméras dirigées vers la préforme fibreuse.

De préférence, la pluralité de caméras est montée dans une boite à lumière ajustée au profil dudit mandrin et placée au plus près de ladite préforme fibreuse et délivrant une lumière bleue de longueur d'onde comprise entre 446 et 500 nm ou une lumière rouge de longueur d'onde comprise entre 620 et 800 nm.

Avantageusement, ladite différence d'aspect résulte d'un examen de courbes de niveaux de gris des images issues des caméras.

Selon le mode de réalisation envisagé, ledit examen est effectué dans chacune des fenêtres de scrutation le long d'au moins une ligne de détection ou bien sur une surface prédéfinie de détection.

L'invention trouve application tant dans une machine à tisser dans laquelle ledit mandrin est un mandrin de traction que dans une machine d'enroulement dans laquelle ledit mandrin est un mandrin d'imprégnation.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif et sur lesquels :
- les figures 1A et 1B sont deux schémas illustrant respectivement un métier à tisser et une machine d'enroulement ;
- la figure 2 est une vue montrant le principe de la surveillance multizones d'une préforme selon l'invention ;
- la figure 3 est une vue représentant une image affichée à l'écran de contrôle des dispositifs des figures 1A ou 1B ;
- la figure 4 est une vue détaillée d'une anomalie ;
- la figure 5 illustre les différentes étapes du procédé de l'invention ; et
- les figures 6A et 6B montrent respectivement en perspective et en vue développée un exemple de répartition des défauts sur une aube de soufflante.

### Description détaillée de modes de réalisation

L'invention sera décrite ci-après dans le cadre de son application à la fabrication d'un carter de rétention de soufflante de moteur aéronautique à turbine à gaz dont un exemple de mis en œuvre est décrit dans le document EP 1,961,923 auquel on pourra se référer.

Le carter est réalisé en matériau composite à renfort fibreux densifié par une matrice. Le renfort est en fibres par exemple de carbone, verre, aramide ou céramique et la matrice est en polymère, par exemple époxide, bismaléimide ou polyimide.

Brièvement, le procédé de fabrication décrit dans ce document consiste à réaliser tout d'abord une texture fibreuse par tissage tridimensionnel avec appel en chaîne sur un mandrin ayant un profil déterminé en fonction du profil du carter à fabriquer.

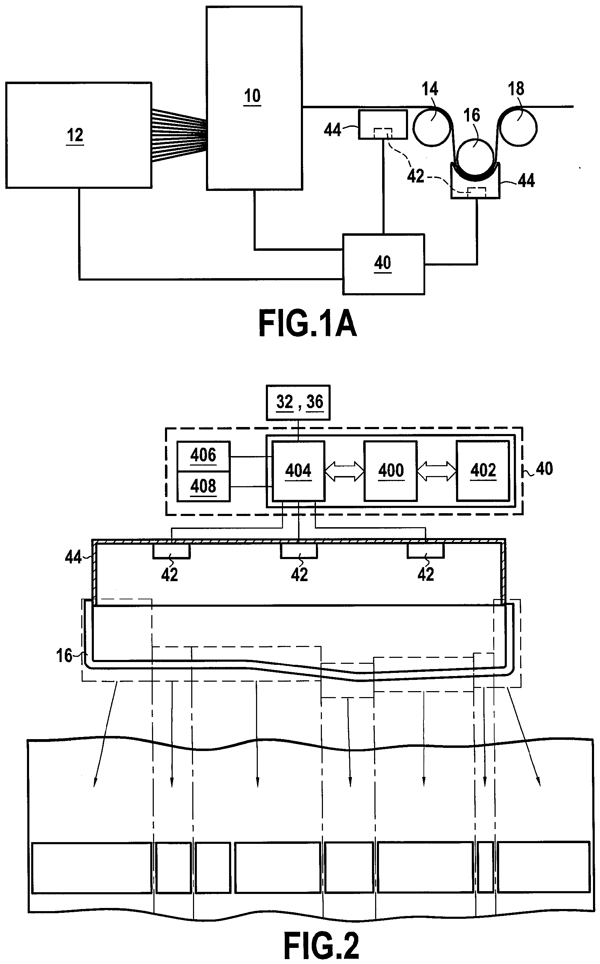

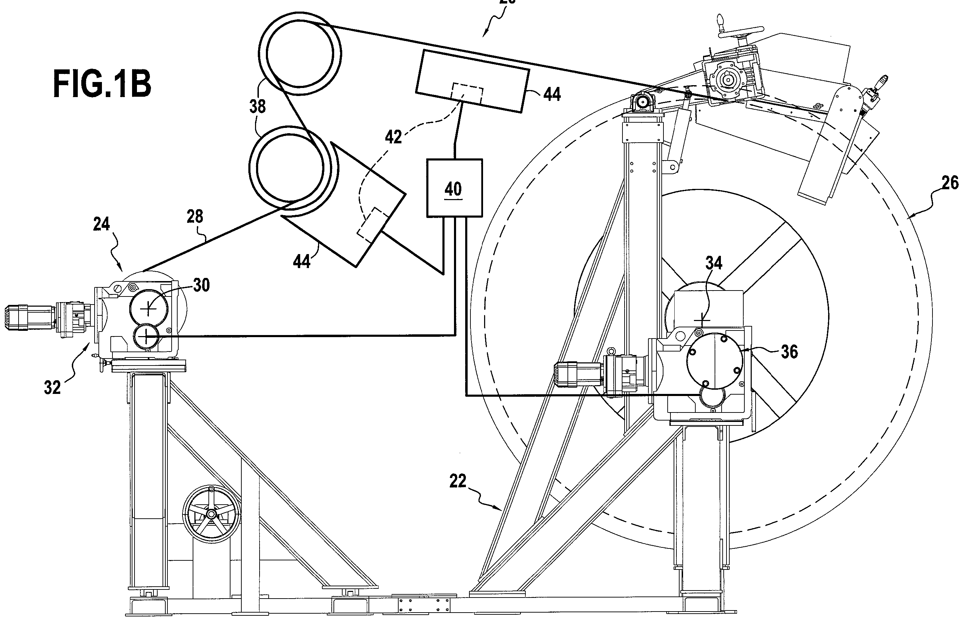

La figure 1A illustre l'obtention d'une telle texture fibreuse par tissage sur un métier à tisser de type jacquard 10 alimenté par un centre d'alimentation en fils de chaine 12 et délivrant sur un mandrin de traction (pull mandrel 14) la texture fibreuse qui sera ensuite transportée vers la machine d'enroulement via différents autres mandrins supports comme un mandrin inverse (reverse mandrel 16) ou un mandrin de prise (take-up mandrel 18). Ce mandrin de prise peut constituer le mandrin d'appel de la machine d'enroulement illustré à la figure 1B.

En effet, une fois tissée, cette texture fibreuse ou préforme s'apparente à un tapis sec et est dévidée d'un mandrin d'appel pour être ensuite transférée et enroulée sur plusieurs tours (typiquement quatre plus une fraction de tour inférieur à 1/4 de tour) sur le mandrin d'un moule d'injection de résine (appelé ci-après mandrin d'imprégnation) dont le profil extérieur correspond au profil interne du carter à fabriquer.

La préforme étant maintenue sur le mandrin d'imprégnation, une imprégnation est alors réalisée par une résine. A cet effet, une enveloppe formée par la jonction de plusieurs pièces est appliquée sur la préforme et la résine est injectée dans le moule ainsi constitué. L'imprégnation peut être assistée par établissement d'une différence de pression entre l'intérieur et l'extérieur du moule dans lequel se trouve la préforme. Après imprégnation, une étape de polymérisation de la résine est réalisée.

La machine d'enroulement 20 permettant cette réalisation en assurant un contrôle en temps réel de l'alignement et d'un éventuel décadrage le préforme comprend un bâti 22 supportant notamment le mandrin d'appel 24 et le mandrin d'imprégnation 26. Le mandrin d'appel 24 qui reçoit la préforme 28 obtenue par tissage tridimensionnel est porté par un axe horizontal 30 dont une extrémité est montée de façon rotative sur le bâti 22 de la machine d'enroulement et l'autre extrémité est couplée à l'arbre de sortie d'un premier moteur 32. Le mandrin d'imprégnation 26 destiné à recevoir en couches superposées la préforme dévidée depuis le mandrin d'appel et qui présente une surface extérieure dont le profil correspond à celui de la surface interne du carter à réaliser est porté par un axe horizontal 34 qui est parallèle à l'axe de rotation 30 du mandrin d'appel et dont une extrémité est montée de façon rotative sur le bâti 22 et l'autre extrémité est couplée à l'arbre de sortie d'un second moteur 36. Des rouleaux de formage (forming rolls 38) peuvent être prévus entre le mandrin d'appel et celui d'imprégnation.

Une unité de commande 40 est reliée aux moteurs 32, 36 pour commander et contrôler la vitesse de rotation de chaque mandrin. De manière plus générale, cette unité de commande organisée classiquement (voir la figure 2) autour d'une unité centrale de traitement 400, de modules mémoires 402 et de modules d'entrées/sorties 404 (pour l'interfaçage notamment avec un écran 406, un clavier 408, etc..) permet de piloter l'ensemble des paramètres de fonctionnement de la machine d'enroulement à la fois lors de la mise en place de la préforme (phase d'étalonnage) et puis au cours de son enroulement (phase de pilotage automatique).

Selon l'invention, il est prévu de détecter automatiquement toute anomalie dès l'engagement et au cours de l'opération d'enroulement (comme durant l'opération préalable de tissage) de la préforme avant l'engagement de la phase d'imprégnation. La solution proposée consiste à mettre en place plusieurs caméras 42 associées à un module d'analyse d'images et positionnées sur la machine d'enroulement (ou le métier à tisser) sous la préforme, de manière à pourvoir enregistrer des images de la face cachée de cette préforme en cours de défilement et détecter les éventuelles anomalies dont elle peut être affectée. Cet équipement sera en mesure de caractériser la surface d'une préforme et la comparer à des motifs de tissage de référence et donc connus comme étant des références sans défaut. Cette cartographie des défauts permettra une reconnaissance automatique en temps réel de ceux-ci et pourra donner à l'opérateur une information sur leur criticité. Il sera notamment possible d'informer l'opérateur sur la conduite à tenir lors de l'apparition d'un défaut (par exemple: arrêter l'enroulement pour analyse, poursuivre l'enroulement, intervenir sur la préforme pour appliquer une réparation en fonction du défaut détecté ...) ou bien de localiser précisément l'ensemble des défauts et permettre un positionnement en 3D sur le carter afin de permettre, en fin d'enroulement, de vérifier si ceux-ci ne sont pas trop rapprochés et pourraient remettre en cause la validité de la pièce ou encore de générer un catalogue de défaut évolutif pour permettre d'affiner la détection.

Plus particulièrement, afin de mettre en relief le motif de tissage de la préforme et s'affranchir de la lumière parasite produit par l'éclairage de l'atelier, ces caméras seront placées dans une boîte à lumière 44 qui sera de préférence placée au plus près de la préforme lors de l'enroulement, pour isoler la surface de la préforme des éclairages ambiants ou parasites de l'atelier au-dessus de la machine.

Sur les figures 1A et 1B, différents emplacements où la boite à lumière 44 peut être installée sont illustrés à titre d'exemple. On peut ainsi noter que lorsque la boite à lumière est disposée en regard d'un mandrin, elle est de préférence ajustée au profil de ce mandrin.

En outre, afin d'augmenter le contraste du motif de tissage de la préforme tissée en fibres de carbone et de favoriser la mise en évidence de l'identification des différents types d'anomalies, on utilisera avantageusement soit une lumière bleue (de longueur d'onde comprise entre 446 et 500 nm) soit une lumière rouge (de longueur d'onde comprise entre 620 et 800 nm).

Comme le montre la figure 2, le module d'analyse d'images qui sera avantageusement intégré à l'unité de commande 40 est quant à lui capable de surveiller simultanément plusieurs zones de la préforme à partir des images fournies par les caméras, et de différencier les motifs de tissage de chacune d'entre elles en détectant une différence d'aspect de la préforme par rapport à des motifs de tissage de référence préalablement enregistrés dans le module et d'envoyer un signal à l'opérateur pour que celui-ci puisse intervenir en cas de discordances et notamment arrête le défilement de la préforme si le résultat de la comparaison entre ces deux motifs de tissage fait apparaitre, dans au moins une des zones surveillées, cette différence d'aspect caractéristique de la présence d'une anomalie résultant de pollutions et/ou défauts de tissage de la préforme. La taille, la position et le nombre de ces zones surveillées sont définis par l'opérateur au moyen de fenêtres de scrutation du module d'analyse d'images, de sorte à couvrir entièrement une bande d'une largeur entière de la préforme. Avantageusement, afin d'obtenir des motifs de tissage homogènes, ces fenêtres de scrutation seront choisies de part et d'autre des fils traceurs tissées dans la préforme. Chaque caméra étant affectée à une zone déterminée de la préforme elle peut donc couvrir une ou plusieurs fenêtres de scrutation.

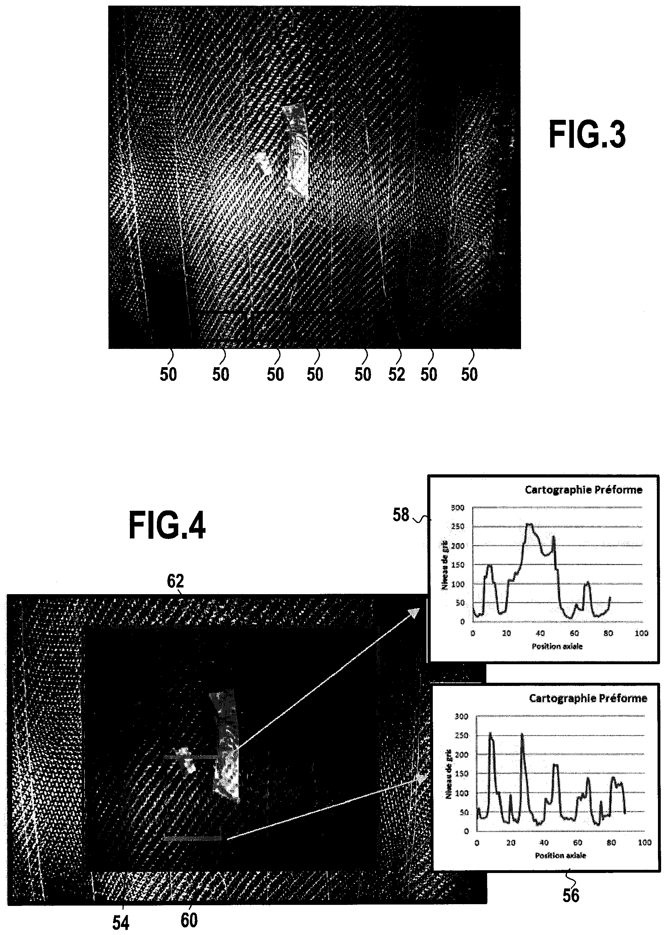

Pour ce faire, et comme l'illustre la figure 2, l'opérateur crée dans une phase d'initialisation du système (lors du démarrage de du tissage ou de l'enroulement), ces fenêtres de scrutation directement sur l'image de la préforme avec un outil logiciel graphique spécifique au module d'analyse d'images. Ces fenêtres sont choisies de préférence dans une bande réputée saine de la préforme, c'est-à-dire dépourvue de pollutions et de défauts. Lorsque l'opérateur visualise sur l'écran de contrôle 406 la présence d'une zone de performe saine dans chaque fenêtre de scrutation, il valide une étape intitulée par exemple « Prise de référence » et le motif de tissage validé apparaissant dans cette zone est enregistré (la figure 3 montre pour une bande donnée de la préforme des exemples de zones saines 50 qui seront validées et non saines 52 qui ne pourront l'être). La différence de motifs est la conséquence des variations du tissage de chaque zone de la préforme. Les données enregistrées sont la cartographie des niveaux de gris de l'image. Le motif de tissage étant répétitif, on obtient avec cette mesure des niveaux de gris de l'image de la préforme, une courbe de niveaux de gris également répétitive. Lors de l'opération d'enroulement ou de tissage, toute variation dans l'allure de la courbe de niveaux de gris sera alors interprétée comme une anomalie.

Un cas d'exemple de détection d'une pollution est illustrée à la figure 4, en l'occurrence un morceau de scotch 54 oublié par un opérateur lors de la mise en place de la préforme sur la machine d'enroulement. On y voit clairement par rapport au motif de tissage de référence pour la zone en question 56 une variation dans le motif de tissage de la préforme par l'analyse de la courbe des niveaux de gris 58. Ce type de détection permet de déceler les anomalies de type pollution (scotch®, fibre de kevlar®, fibres courtes,...) mais également la plupart des défauts de tissage comme un flotté en chaîne (Warp float), un flotté en trame (Weft float), un long flotté (Misweave), des boucles (Loops), un fil traceur cassé (Broken Tracer), un fil de chaîne cassé (Broken warp), un fil manquant (Missed pick), un double fil (Double pick), un fil manquant partiellement (Partial missed pick), un fil effiloché (Fuzzy),.... Le mode de détection est présenté, dans l'exemple illustré, suivant une ligne de détection (traits larges horizontaux 60, 62), mais le module est bien entendu capable de contrôler la variation du motif de tissage d'une surface de détection équivalent à la fenêtre de scrutation pour assurer si nécessaire un mode de détection plus sensible. Un seuil de détection en niveau de gris et en position axiale est également paramétrable afin de pourvoir intégrer les variations « normales » du motif de tissage.

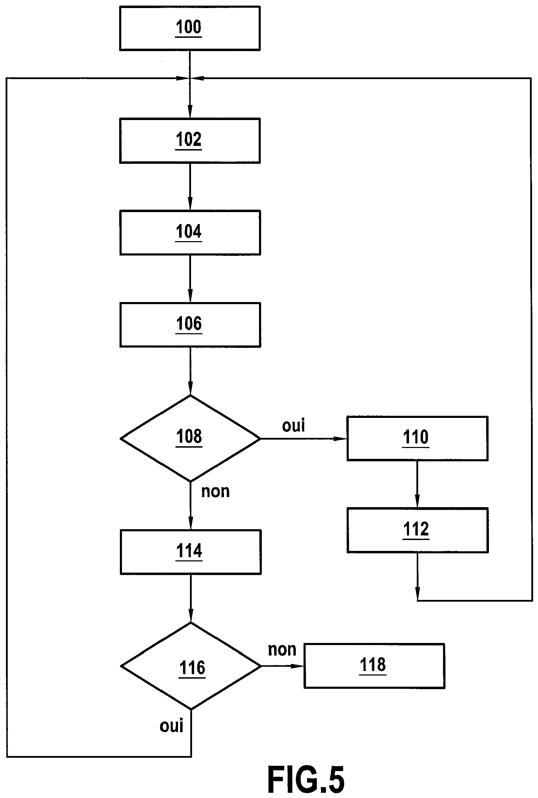

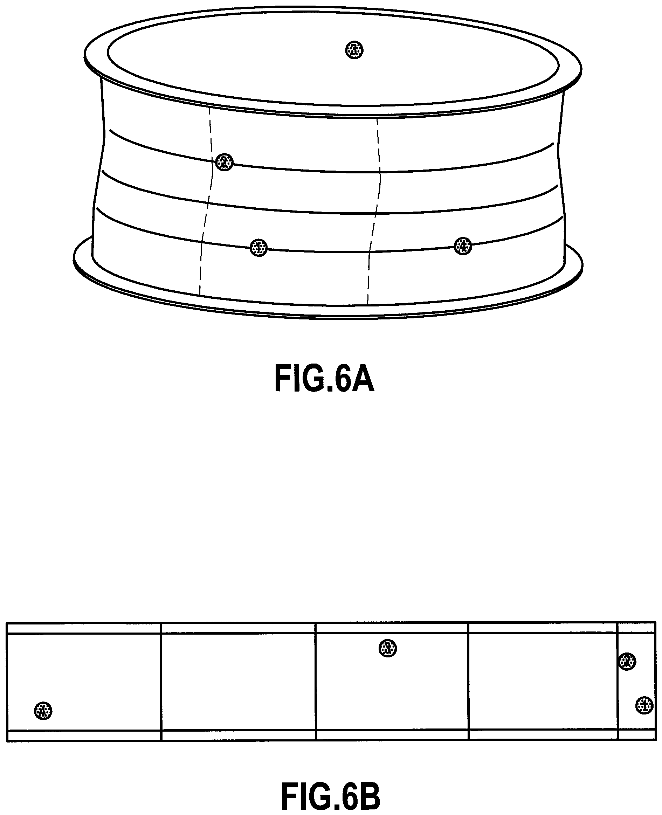

Les différentes étapes mises en œuvre pour le traitement des anomalies et leur analyse statistique en vue du suivi qualité des opérations de tissage et/ou d'enroulement sont maintenant illustrées à la figure 5 avec l'exemple d'une machine d'enroulement. La phase d'initialisation achevée (étape 100), l'enroulement de la préforme est engagé et se poursuit jusqu'à ce qu'il est procédé par le module d'analyse d'images à la détection d'une anomalie (étape 102). A l'apparition de cette anomalie, l'opération d'enroulement est arrêtée avec figeage de l'écran de contrôle sur l'anomalie détectée. Il est affecté automatiquement un numéro d'ordre à cette anomalie et sa position est alors enregistrée avec une image de l'anomalie, de même que l'opérateur est invité à choisir une désignation pour cette anomalie parmi différents types d'anomalies préalablement enregistrés (étape 104). L'opérateur peut dès lors intervenir directement sur la préforme pour constater de visu cette anomalie (étape 106) et déterminer alors si une réparation est possible (test de l'étape 108). S'il est répondu oui à ce test, la réparation est alors effectuée (étape 110) et il est affecté automatiquement un numéro d'ordre à cette réparation qui est alors enregistré avec une image de la réparation effectuée, de même que l'opérateur est invité à choisir une désignation pour cette réparation parmi différents types de réparations préalablement enregistrés (étape 112). L'enroulement peut alors reprendre (retour à l'étape 102 de détection d'éventuelles nouvelles anomalies). S'il est répondu non au test de l'étape 108, il est alors fait appel à un expert (étape 114) qui va décider si cette anomalie est critique (test de l'étape 116), c'est-à-dire de nature à entraîner un arrêt de l'enroulement (étape 118) et donc un rebut de la préforme ou si au contraire l'anomalie est acceptable et donc que l'enroulement peut être repris (retour à l'étape 102). A la fin de l'opération d'enroulement, un rapport d'analyse peut être édité mentionnant les anomalies reconnues et celles réparées. Avantageusement ce rapport peut se présenter sous la forme d'une représentation du carter en trois dimensions telle qu'illustrée à la figure 6A ou sous une forme développée telle qu'illustrée à la figure 6B, les différences anomalies réparées ou non apparaissant dans leur position respectives avec leur numéro d'ordre. Cette représentation graphique permet une meilleure visibilité de la répartition des anomalies et de leur type. Il en résulte un gain de temps appréciable sur le cycle de traitement des dérogations en permettant une prise de décision plus rapide. La possibilité de comparer (superposer) la cartographie des anomalies (tissage et/ou enroulement) issue de l'invention avec une cartographie des défauts constatés par un contrôle par ultrasons est un avantage supplémentaire.

## Revendications

1. Procédé de détermination d'anomalies de tissage dans une machine à tisser ou enrouler une préforme fibreuse sur un mandrin ayant un axe de rotation sensiblement horizontal (30) et destiné à la recevoir, le mandrin étant entrainé autour de cet axe de rotation par un moteur (32) actionné par une unité de commande (40) ; procédé dans lequel plusieurs caméras (42) dirigées sous la texture fibreuse scrutent la face intérieure de la préforme fibreuse et acquièrent des images de cette face intérieure et un module d'analyse d'images (40) traite ces images de la face intérieure de la préforme fibreuse dans plusieurs fenêtres adjacentes de scrutation pour en extraire des motifs de tissage et les comparer avec des motifs de tissage de référence préalablement enregistrés dans le module et l'unité de commande arrête la rotation du mandrin si le résultat de la comparaison fait apparaitre, dans au moins une fenêtre de scrutation, une différence d'aspect entre ces deux motifs de tissage caractéristique de la présence d'une anomalie résultant de pollutions et/ou défauts de tissage de la préforme fibreuse et lorsqu'une anomalie est reconnue, sa position sur la préforme fibreuse et une désignation choisie par un opérateur parmi des types d'anomalies prédéterminés sont enregistrés avec une image de ladite anomalie et lorsque cette anomalie reconnue est réparée, une désignation correspondante choisie par un opérateur parmi des types de réparation prédéterminés est enregistrée avec une image de ladite réparation et les anomalies reconnues et les anomalies réparées sont visualisées sur une représentation développée ou en trois dimensions de ladite préforme fibreuse, accessible à l'opérateur au niveau de ladite unité de commande.

2. Procédé selon la revendication 1, dans lequel la taille, la position et le nombre des fenêtres de scrutation sont définies par l'opérateur directement à partir des images issues des caméras.

3. Procédé selon la revendication 2, dans lequel le nombre de fenêtres de scrutation correspond au plus au nombre de caméras dirigées vers la préforme fibreuse.

4. Procédé selon la revendication 3, dans lequel les caméras sont montées dans une boite à lumière ajustée au profil dudit mandrin et placée au plus près de ladite préforme fibreuse et délivrant une lumière bleue de longueur d'onde comprise entre 446 et 500 nm ou une lumière rouge de longueur d'onde comprise entre 620 et 800 nm.

5. Procédé selon la revendication 1, dans lequel ladite différence d'aspect résulte d'un examen de courbes de niveaux de gris (56, 58) des images issues des caméras.

6. Procédé selon la revendication 5, dans lequel ledit examen est effectué dans chacune des fenêtres de scrutation le long d'au moins une ligne de détection (60, 62).

7. Procédé selon la revendication 5, dans lequel ledit examen est effectué dans chacune des fenêtres de scrutation sur une surface prédéfinie de détection.

8. Procédé selon la revendication 1, dans lequel ledit mandrin est un mandrin de traction (18) d'une machine à tisser.

9. Procédé selon la revendication 1, dans lequel ledit mandrin est un mandrin d'imprégnation (24) d'une machine d'enroulement.

10. Procédé selon la revendication 1, dans lequel ladite représentation de ladite préforme fibreuse est superposée à une cartographie des défauts constatés par un contrôle par ultrasons.

## Patentansprüche

1. Verfahren zum Ermitteln von Webanomalien in einer Maschine zum Weben oder Aufwickeln eines Faservorformlings auf einen Dorn, der eine im Wesentlichen horizontale Rotationsachse (30) aufweist und dazu bestimmt ist, diesen aufzunehmen, wobei der Dorn durch einen über eine Steuereinheit (40) betätigten Motor (32) um diese Rotationsachse angetrieben wird; Verfahren, bei dem mehrere Kameras (42), welche unter der Faserstruktur ausgerichtet sind, die Innenseite des Faservorformlings abtasten und Bilder von dieser Innenseite aufnehmen, und ein Bildanalysemodul (40) diese Bilder von der Innenseite des Faservorformlings in mehreren benachbarten Abtastfenstern verarbeitet, um hieraus Webmuster auszulesen und sie mit zuvor im Modul gespeicherten Referenzwebmustern zu vergleichen, und die Steuereinheit die Rotation des Dorns stoppt, wenn das Ergebnis des Vergleichs in wenigstens einem Abtastfenster einen Unterschied im Aussehen zwischen diesen beiden Webmustern erkennen lässt, der für das Vorhandensein einer Anomalie, welche aus Verschmutzungen und/oder Webfehlern des Faservorformlings resultiert, charakteristisch ist, und, wenn eine Anomalie erkannt wird, deren Position auf dem Faservorformling sowie eine Bezeichnung, welche von einer Bedienungsperson aus vorbestimmten Anomalie-Typen ausgewählt wird, mit einem Bild der Anomalie gespeichert werden, und wenn diese erkannte Anomalie repariert wird, eine entsprechende Bezeichnung, die von einer Bedienungsperson aus vorbestimmten Reparatur-Typen ausgewählt wird, mit einem Bild der Reparatur gespeichert wird, und die erkannten Anomalien und die reparierten Anomalien in einer entwickelten oder dreidimensionalen Darstellung des Faservorformlings, die für die Bedienungsperson im Bereich der Steuereinheit zugänglich ist, dargestellt werden.

2. Verfahren nach Anspruch 1, bei dem die Größe, die Position und die Anzahl der Abtastfenster durch die Bedienungsperson direkt anhand der Bilder aus den Kameras definiert werden.

3. Verfahren nach Anspruch 2, bei dem die Anzahl der Abtastfenster höchstens der Anzahl der in Richtung des Faservorformlings gerichteten Kameras entspricht.

4. Verfahren nach Anspruch 3, bei dem die Kameras in einer Lightbox angebracht sind, die an das Profil des Dorns angepasst ist und so nah wie möglich an dem Faservorformling angeordnet ist und ein blaues Licht mit einer Wellenlänge im Bereich zwischen 446 und 500 nm oder ein rotes Licht mit einer Wellenlänge im Bereich zwischen 620 und 800 nm liefert.

5. Verfahren nach Anspruch 1, bei dem der Unterschied im Aussehen aus einer Untersuchung von Grauwertkurven (56, 58) der Bilder aus den Kameras resultiert.

6. Verfahren nach Anspruch 5, bei dem die Untersuchung in jedem der Abtastfenster entlang wenigstens einer Erfassungslinie (60, 62) durchgeführt wird.

7. Verfahren nach Anspruch 5, bei dem die Untersuchung in jedem der Abtastfenster auf einer vordefinierten Erfassungsfläche durchgeführt wird.

8. Verfahren nach Anspruch 1, bei dem der Dorn ein Ziehdorn (18) einer Webmaschine ist.

9. Verfahren nach Anspruch 1, bei dem der Dorn ein Imprägnierdorn (18) einer Wickelmaschine ist.

10. Verfahren nach Anspruch 1, bei dem die Darstellung des Faservorformlings einer Kartierung der durch eine Ultraschallprüfung festgestellten Fehler überlagert wird.

## Claims

1. A method of determining weaving anomalies in a machine for weaving or winding a fiber preform onto a mandrel having an axis of rotation (30) that is substantially horizontal for the purpose of receiving the preform, the mandrel being driven about the axis of rotation by a motor (32) actuated by a control unit (40); in which method a plurality of cameras (42) looking at the underside of the fiber texture scan the bottom face of the fiber preform and acquire images of the bottom face, and an image analysis module (40) processes the images of the bottom face of the fiber preform in a plurality of adjacent scan windows in order to extract weaving patterns therefrom and compare them with reference weaving patterns previously stored in the module, and the control unit stops rotation of the mandrel if the result of the comparison reveals, in at least one scan window, a difference in appearance between the two weaving patterns that is characteristic of the presence of an anomaly resulting from pollution and/or weaving faults in the fiber preform, and when an anomaly is recognized, its position on the fiber preform and a label selected by an operator from predetermined types of anomaly are stored together with an image of said anomaly, and when the recognized anomaly is repaired, a corresponding label selected by an operator from predetermined types of repair is stored together with an image of said repair, and the recognized anomalies and the repaired anomalies are displayed in a developed representation or a three-dimensional representation of said fiber preform that is accessible to the operator from said control unit.

2. The method of claim 1, wherein the sizes, the positions, and the number of scan windows are defined by the operator directly on images coming from the cameras.

3. The method of claim 2, wherein the number of scan windows corresponds at most to the number of cameras pointing towards the fiber preform.

4. The method of claim 3, wherein the cameras are mounted in a light box adapted to match the profile of said mandrel and placed as close as possible to said fiber preform, the light box delivering blue light at a wavelength lying in the range 446 nm to 500 nm, or red light at a wavelength lying in the range 620 nm to 800 nm.

5. The method of claim 1, wherein said appearance difference results from examining gray level curves (56, 58) for the images from the cameras.

6. The method of claim 5, wherein said examination is performed in each of the scan windows along at least one detection line (60, 62).

7. The method of claim 5, wherein said examination is performed in each of the scan windows over a predefined detection area.

8. The method of claim 1, wherein said mandrel is a pull mandrel (18) of a loom.

9. The method according to claim 1, wherein said mandrel is an impregnation mandrel (24) of a winding machine.

10. The method of claim 1, wherein said representation of said fiber preform is superposed with a map of faults observed when performing ultrasound monitoring.
